# EUROPEAN PATENT APPLICATION

(11) **EP 2 224 738 A1**
(43) Date of publication of application: **01.09.2010**
(21) Application number: 09250541.1
(22) Date of filing: 27.02.2009
(51) Int. Cl.: H04N 7/01

(54) **Identifying occlusions**

(71) Applicant: NXP B.V., 5656 AG Eindhoven (NL)
(72) Inventor: Piek, Matthijs, Redhill, Surrey RH1 1DL (GB); Cordes, Nico, Redhill, Surrey RH1 1DL (GB); Gurp, Jacco van, Redhill, Surrey RH1 1DL (GB)
(74) Representative: Epping - Hermann - Fischer

(57) **Abstract**

A method of generating an interpolated frame (103) in a temporal sequence of video frames (100, 101, 102) comprising a current frame (100) and a previous frame (101), the method comprising: determining an occlusion region comprising blocks in the previous frame identified as having no corresponding block in the current frame; for each block in the occlusion region, determining two candidate motion vectors (201, 202) corresponding to a background motion vector and a foreground motion vector and selecting as the foreground motion vector the candidate motion vector that projects on to a previously determined occlusion area (1103) in a second previous frame (102).

## Description

The invention relates to identification of occlusion regions for motion-compensated frame rate up-conversion of video sequences.

When playing back a video from a storage medium to a display, such as a video stored on a digital versatile disc (DVD) played on a television screen, the frame rate of the display may be greater than that of the source material. Many modem televisions allow for an increased frame rate, which may for example be 100Hz, whereas the source material may have a frame rate of 50Hz or less. This higher frame rate can reduce the flicker that may otherwise be apparent to a user.

One technique for up-scaling the frame rate, for example from 50Hz to 100Hz, would be simply to repeat input frames in the output video signal. This technique, however, does not smooth out motion in the video and can result in visual artifacts becoming apparent as jerkiness in the up-scaled display.

Motion compensated frame rate up-conversion techniques are therefore typically used to increase frame rates, while attempting to reduce such artifacts. Such motion compensation involves intermediate frames being generated by interpolation between successive input frames. By estimating motion vectors for blocks in successive input frames, portions of the input frames that correspond to moving objects can be translated to intermediate positions in the interpolated frames. This results in motion being apparently smoothed out in the output video sequence.

The quality of interpolated images in picture rate up-conversion is predominantly dependent on the accuracy of the motion vector fields. Block-based motion estimation techniques typically result in incorrect vectors in occlusion regions, which leads to so-called halo effects in an up-converted video sequence. This can occur when a foreground object in the video sequence is passing in front of a background object. Either one or both of the foreground and background objects may be moving relative to the boundary of the video frames. In the case of a static camera filming a moving object, the foreground object moves against a static background. In the alternative, a moving foreground object may be tracked, resulting in an apparently moving background. Combinations of these situations are also common.

When a foreground object changes position from a first frame to a second frame, an area in front of the object, that is to say immediately adjacent the edge of the object (to the right of the object, if moving from left to right) is occluded in the second frame, and a further area behind the object (to the left of the object, if moving from left to right) is revealed in the second frame. Such areas are known as occlusion areas or regions, and are characterised as *uncovering occlusion regions* and *covering occlusion regions.* By definition, uncovering occlusion regions are those parts of a frame that were not present in a previous frame, typically the immediately preceding frame, while covering occlusion regions are those parts of a frame that are not present in a subsequent frame.

The presence of occlusion regions results in common techniques for motion compensated frame rate conversion creating artifacts in the output up-scaled video known as halo effects. A halo effect is caused when an interpolated frame displays a portion of an occlusion region incorrectly, due to the inability of the conversion technique to determine the correct image data to use in the case of an interpolated occlusion area. Various different techniques have been proposed to solve this occlusion problem, with varying degrees of success, as for example disclosed in references [1], [2] and [3], cited at the end of this document. However, none of the proposed techniques achieve the desired combination of a large reduction of halo artifacts together with an adequate robustness to the different types of input material that might be encountered.

In reference [4], a further technique is disclosed dealing with occlusion regions In general terms, this technique comprises five main steps:
1: Estimate, for the previous and current video frames, the forward and backward motion vectors;
2. Combine each pair of motion fields to form an occlusion-free motion vector field;
3. Generate an interpolated ('retimed') vector field in-between the two combined vector fields ;
4. Determine the occlusion area and occlusion type (i.e. covering or uncovering);
5. Perform interpolation according to retimed motion vector field and occlusion mask;

References [5] & [6] disclose methods of performing steps 3 and 4. In all known techniques, detection of occlusion in video frames is an essential step. This step can be performed implicitly or explicitly. In reference [2], a implicit detection technique is proposed, comprising the following steps:
1. Find the occlusion area;
2. Determine the occlusion type;
3. Calculate the background motion vector; and
4. Perform a robust up-conversion using the occlusion type and background motion vector.

The techniques disclosed in reference [2], as well as in references [5], [6] and [7], seek to determine a mismatch between estimated motion vectors to detect occlusion, and/or to relate the magnitude of a match error (sometimes called a residue) to an amount of occlusion.

Such known methods of explicit occlusion detection are, however, not ideal. Determining a mismatch suffers from the frequent occurrence of poor motion vectors, whereas relating the magnitude of a match error to an amount of occlusion suffers from the fact that the absolute match error relates poorly to the presence of occlusion. For example, a good match in high contrast areas might provide a higher match error than a poor match in occluded areas with low contrast. Failure in occlusion detection frequently means subsequent steps in the algorithm will fail, thereby leading to visually annoying artifacts in the resulting interpolated image.

A particular problem with previous approaches is that a so-called 3-frame motion estimator is used the steps of estimating motion vectors and combining motion fields, as for example described in [4]. This requires usage of a 'next', or 'future', input frame in order to create an occlusion-free motion vector field for the 'current' input frame. As a result of this, an MC-FRC (motion compensated frame rate up-conversion) algorithm according to previous methods can introduce significant delay, or latency, in processing as compared with previous, non-halo-reduced, algorithms that do not make use of a future input frame.

Various problems are associated with a higher latency, such as delay between user input (e.g. moving a mouse cursor on-screen) and the reaction on the screen, as well as delay between the audio and video when the audio is routed through an external audio device. These have to be corrected for by other means, thereby further increasing the complexity of the system, which is disadvantageous.

In order to avoid the latency of previous solutions, one can either revert to a non-halo reduced algorithm, which is not desirable from a picture-quality point of view, or attempt to find an alternative method of motion-compensated frame interpolation, without significantly decreasing picture quality. The method proposed in [7], for example, is one such attempt, which seeks to modify the steps of estimating motion vectors and combining motion fields in order to achieve an occlusion free vector field without the usage of a 'next' input frame. However, although the concept has been validated to work in theory, its performance in practice is typically only adequate, because the method relies on an assumption that comparing textures between background regions generates a lower error than comparing textures between the foreground and background. Although this assumption holds in the majority of cases, it may fail in others, and hence generate visible artifacts.

An alternative method for generating an occlusion-free vector field at the interpolated position could be made more directly, without the need for explicitly performing the steps of estimating and combining motion vector fields. This would, however, require knowledge of both the occlusion area and occlusion type (i.e. covering or uncovering) in order to correctly perform a final interpolation step.

The listing or discussion of a prior-published document in this specification should not necessarily be taken as an acknowledgement that the document is part of the state of the art or is common general knowledge.

Consequently, it is an object of the invention to provide an improved method of occlusion area detection and identification that provides a reduction in latency while retaining the advantages of a reduction in visible halo effects arising from the up-scaling process.

In accordance with a first aspect of the invention there is provided a method of generating an interpolated frame in a temporal sequence of video frames comprising a current frame and a previous frame, the method comprising:
determining an occlusion region comprising blocks in the previous frame identified as having no corresponding block in the current frame;
for each block in the occlusion region, determining two candidate motion vectors corresponding to a background motion vector and a foreground motion vector; and
selecting as the foreground motion vector the candidate motion vector that projects on to a previously determined occlusion area in a second previous frame.

Occlusion regions determined according to the above method would generally be identified as covering occlusion regions, being determined from the previous frame with respect to the current frame.

An advantage of this method is that selection of one of the candidate motion vectors can be made based on previous calculations, which consequently require little further processing. A further advantage is that a time lag in producing the interpolated frame, and hence the up-scaled video sequence, is reduced because a 'future' frame is not required.

The candidate motion vectors for each block in the previous frame having no corresponding block in the current frame may be determined by selecting the two most common motion vectors estimated for a spatial neighbourhood surrounding each block. These two most common motion vectors are likely to correspond to motion vectors for the background and foreground objects, because in an occlusion region the foreground is moving relative to the background and is covering and uncovering portions of the background in the process. Portions that are being uncovered and covered are therefore most likely to have the same motion vector as the background object. An advantage of choosing the two most common forward motion vectors is that these are calculated during motion vector estimation for non-occlusion regions of the frames, and so little further analysis is required.

Corresponding blocks in the current frame may be determined according to a minimum sum of absolute differences between each block in the previous frame and a selection of candidate blocks in the current frame. Using a sum of absolute differences (SAD) is a common way of comparing blocks from different frames, although other calculation methods may alternatively be used.

The candidate motion vectors used for selection of the foreground motion vector are preferably forward motion vectors derived from the previous frame.

The method preferably further comprises generating the interpolated frame in temporal sequence between the current and previous frames by generating blocks in an occlusion region of the interpolated frame according to a projection of the background motion vector on to the previous frame. Typically an entire motion vector field will be generated for the interpolated frame, and blocks from the previous and current frame identified for these motion vectors, according to the regions in the interpolated frame being covering occlusion regions, uncovering occlusion regions or non-occlusion regions. Generating the motion vector field, instead of generating blocks in the interpolated from derived from motion vectors in the current and previous frames avoids the problem of holes in the interpolated frame due to diverging motion vectors in the current or previous frame.

The step of generating the interpolated frame may further comprise retiming a covering occlusion mask from the covering occlusion region of the previous frame; and adjusting the boundaries of the retimed occlusion mask according to the two candidate vectors. This method corresponds to the way in which the occlusion areas can be selected from the previous frame, and consequently can use a corresponding processing method. Because it can be presumed that the two candidate motion vectors correspond to the background and foreground motion vectors, this method allows the retimed occlusion mask to be accurately sized without needing to know which of the two motion vectors corresponds to the foreground and which to the background.

The above described method corresponds to determining a foreground motion vector to be used in covering occlusion regions, i.e. regions of the previous frame that are projected forward on to the interpolated frame. The method of the invention can also be formulated with reference to the current frame, with occlusion regions in the current frame being used to generate corresponding portions in the interpolated frame. Hence, in accordance with an alternative formulation of the first aspect of the invention there is provided a method of generating an interpolated frame in a temporal sequence of video frames comprising a current frame and a previous frame, the method comprising:
determining an occlusion region in the current frame comprising blocks identified as having no corresponding block in the previous frame;
for each block in the occlusion region, determining two candidate motion vectors corresponding to a background motion vector and a foreground motion vector; and
selecting as the foreground motion vector the candidate motion vector that projects on to a previously determined occlusion area in a second previous frame.

Occlusion regions determined according to the above method would generally be identified as uncovering occlusion regions, being determined from the current frame with respect to the previous frame.

Various optional and further advantageous features according to the alternative formulation of the first aspect of the invention may be provided in accordance with the further features listed above, *mutatis mutandis*.

The further feature of selecting one of the two candidate backward motion vectors also applies to the alternative formulation of the first aspect of the invention, wherein the foreground backward motion vector may be selected by projecting each of the candidate backward motion vectors further back to a second previous frame and selecting the candidate backward motion vector that projects on to a previously determined occlusion area in the second previous frame.

The invention is preferably implemented using both of the above formulations of the first aspect, i.e. with foreground motion vectors being determined for occlusion areas in both the current and previous frames, so that both covering and uncovering occlusion regions can be projected on to the interpolated frame.

According to a second aspect of the invention there is provided a video frame rate up-scaling apparatus for generating an interpolated frame in a temporal sequence of video frames comprising a current frame and a previous frame, the apparatus comprising:
an occlusion region generator for determining an occlusion region in the previous frame comprising blocks having no corresponding block in the current frame;
a motion vector module for determining two candidate motion vectors for each block in the occlusion region corresponding to a background motion vector and a foreground motion vector; and
a vector projection module for selecting as the foreground motion vector the candidate motion vector that projects on to a previously determined occlusion area in a second previous frame..

As with the first aspect of the invention, the second aspect of the invention can also be formulated in terms of the current frame and uncovering occlusion regions, with motion vectors being used by the apparatus to generate uncovering occlusion regions in the interpolated frame. In a practical implementation of an apparatus according to the invention, both formulations will generally be employed.

The invention may be implemented on a custom integrated circuit such as a video processor chip. Such a chip may comprise part of the circuitry used in a video processing apparatus such as a video storage and playback unit or a video display unit. An exemplary video playback unit is a digital versatile disk player. An exemplary video display unit is a television. A video processing apparatus embodying an aspect of the invention may be configured to receive an input video input signal at a first frame rate and display an output video signal at a second higher frame rate. The apparatus consequently operates to provide motion compensated frame rate up-scaling of the input video signal to provide an output video signal having a higher frame rate.

The invention may also be implemented as software loaded on to a programmable microprocessor or computer system. A particular embodiment may comprise a computer program comprising instructions for a computer to execute the above first aspect of the invention. The computer program may be embodied as a computer program product, comprising a computer readable medium having thereon computer program code means adapted, when said program is loaded onto a computer, to make the computer execute the method of the invention. Alternatively, the computer program may be in a form distributable by electronic data transmission, comprising computer program code means adapted, when said program is loaded onto a computer, to make the computer execute the method of the invention.

The invention will now be described by way of example only, and with reference to the appended drawings in which:
figure 1 is a schematic illustration of motion estimation from a previous frame towards a current frame and from the current frame towards the previous frame;
figure 2 is a schematic illustration of candidate backward motion vectors projected from the current frame on to the previous frame;
figure 3 is a schematic illustration of candidate backward motion vectors projected from an interpolated frame towards the current frame;
figure 4 is a schematic illustration of an interpolated frame having a retimed occlusion mask;
figure 5a is a schematic illustration of a correctly aligned retimed occlusion mask;
figure 5b is a schematic illustration of an incorrectly aligned retimed occlusion mask;
figure 6 is a schematic illustration of a zero vector for interpolating an occlusion mask;
figure 7 is a schematic illustration of a retimed occlusion mask after zero-order interpolation;
figure 8 is a schematic illustration of a forward motion vector used to reduce an over-classified retimed occlusion mask;
figure 9 is a schematic illustration of a motion vectors associated with a re-classified retimed occlusion mask;
figure 10 is a schematic illustration of a forward motion vector confirming a re-classified retimed occlusion mask;
figure 11 is a schematic illustration of candidate forward motion vectors being projected towards a second previous frame;
figure 12 is a schematic illustration of a re-classified retimed interpolated occlusion mask with a chosen forward motion vector field;
figure 13 is a schematic flow diagram illustrating an exemplary embodiment of the invention;
figure 14 is a schematic flow diagram illustrating an further exemplary embodiment of the invention; and
figure 15 is a schematic block diagram illustrating an exemplary embodiment of an apparatus according to the invention.

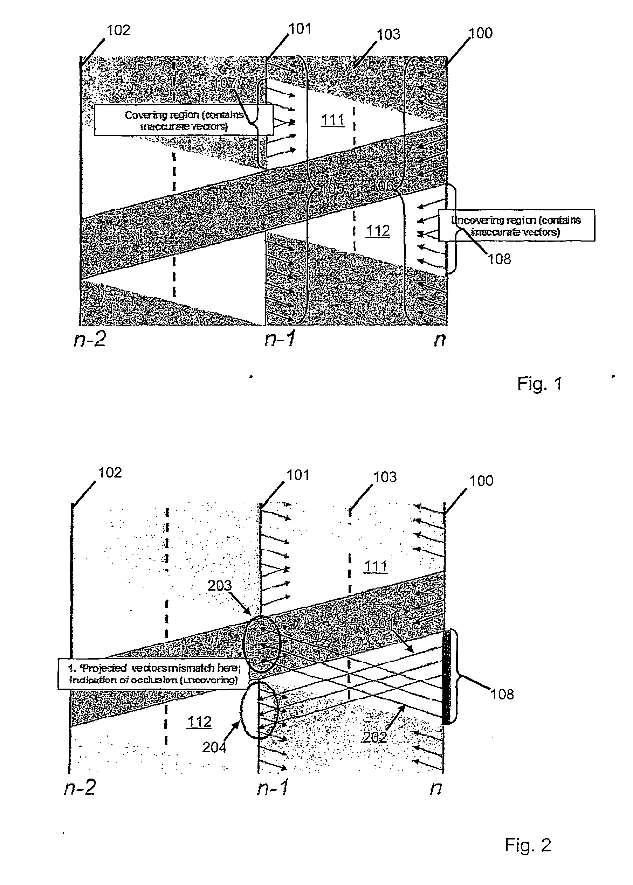

Figure 1 schematically illustrates performing motion estimation from a first previous (n-1) frame 101 towards a current (n) frame 100, in a temporal sequence of video frames 100, 101, 102. A motion estimation vector field is derived for the first previous (n-1) frame 101 towards the current frame 100, resulting in a 'previous-forward' estimated motion vector field 105 for the first previous frame 101. A further motion estimation vector field is derived for the current (n) frame 100 towards the first previous (n-1) frame 101, resulting in a 'current-backward' estimated motion vector field 106. These motion estimation vector fields 105, 106 can be used to derive a temporally intermediate frame 103, in which the position of blocks in the intermediate frame are derived by interpolation from the motion vector fields 105, 106 and the corresponding blocks in the current and previous frames 100, 101.

Both vector fields, 105, 106, however, suffer from occlusion problems, as indicated by regions 107, 108 in which motion vectors are inaccurate and therefore unreliable. In the uncovering region 108, backward motion vectors are unreliable because the blocks in this region do not have corresponding blocks in the first previous frame 101. In the covering region 107, the forward motion vectors are unreliable because blocks in this region do not have corresponding blocks in the current frame. A typical motion vector estimation technique will attempt to match blocks in successive frames by finding blocks within a limited region around a current block that has a minimum mismatch. Using such motion vectors to generate the intermediate frame 103 when such uncovering and covering regions are present can result in halo effects becoming apparent in the uncovering and covering occlusion regions, which in figure 1 correspond to triangular areas 111, 112.

A common match criterion used for estimation of motion vectors is to calculate the sum of absolute differences (SAD) between a current block and a range of candidate blocks in an adjacent frame. A candidate motion vector is chosen according to the minimum resulting SAD. Alternatively, for example where a minimum SAD for the range of candidate blocks is too high, i.e. above a preset maximum SAD, candidate vectors may be chosen according to the immediately adjacent candidate vectors.

Each frame will typically comprise foreground and background objects, both of which may be moving from frame to frame. Analysis of a single frame cannot provide indications of which blocks in the frame correspond to foreground and background. However, analysis of two or more frames can provide information, derivable from estimation of motion vectors, of which blocks are at least likely to be part of a background object and consequently which blocks are likely to be part of a foreground object. The results of this can then be used in determining how to adjust an occlusion-free mask to generate more accurate and reliable interpolated frames.

Figure 2 illustrates a technique for confirming whether blocks in the current frame are within an occlusion region 108. Two sets of candidate vectors 201, 202 are projected towards the previous frame 101. In both cases, the vectors at the projected locations 203, 204 do not correspond with forward vectors from blocks in the previous frame 101, confirming that the origin of set of projected vectors is an occlusion region. In the case where a vector being projected corresponds with a vector at the projected location, no occlusion is present at the origin of the projected vector.

Depending on the location of the origin of the projected vector, the occlusion type will be either covering, i.e. if the origin is located in the forward vector field from the previous frame 101, or uncovering, i.e. if the origin is located in the backward vector field from the current frame 100.

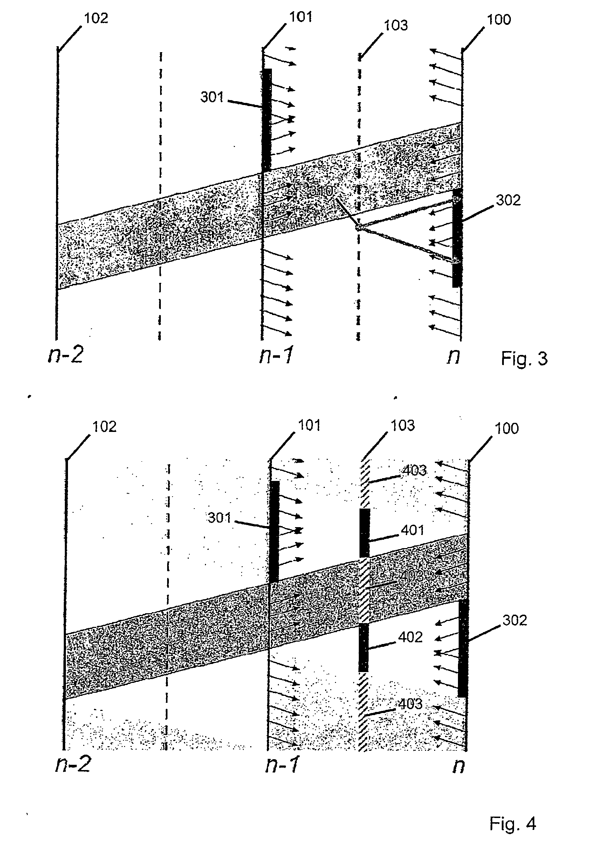

The occlusion masks generated by determining occlusion and non-occlusion areas according to the above method are only valid for the temporal positions n-1 (the previous frame 101) and n (the current frame 100). In order to generate an accurate interpolated intermediate frame 103, these occlusion masks need to be retimed to the interpolated position. To achieve this, a vector can be used, selected from either the forward or backward candidate motion vectors 310, as shown in figure 3, without the need for motion compensation. Figure 3 shows a covering occlusion region 301 in the previous frame 101 and an uncovering occlusion region 302 in the current frame 100. The candidate motion vectors 310 can be used to retime uncovering information from the backward motion vector field from the current frame 100 on to the interpolated frame 103, and covering information from the forward motion vector field from the previous frame 101 on to the interpolated frame 103.

The result of the interpolation operation is a retimed occlusion mask as shown in figure 4, comprising covering occlusion areas 401, uncovering occlusion areas and areas of no occlusion 403.

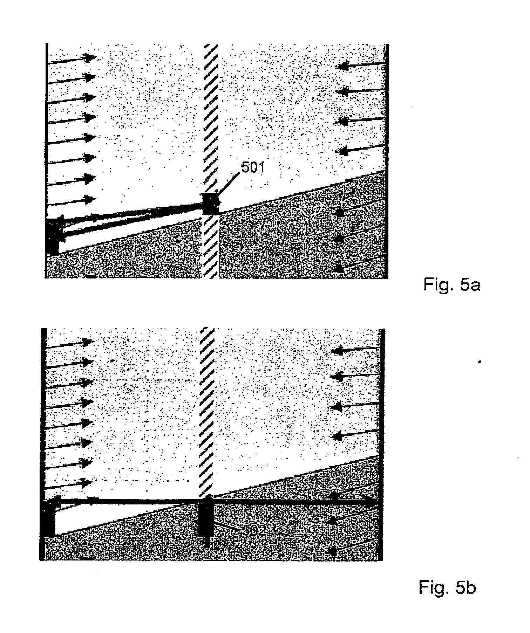

Compared to known methods, the above method of defining a re-timed occlusion mask results in lower latency because there is no need to use a 'next' video frame. Compared to a zero-order interpolation method, the above method provides a better quality because over-and under-classification of occlusion is avoided. This is illustrated in figures 5a and 5b, in which a retimed occlusion mask 501 according to the above method (figure 5a), which is correctly aligned with the moving foreground and background objects, can be compared to a known zero-order interpolation method (figure 5b) where the occlusion mask 502 is misaligned. The result illustrated in figure 5b would result in halo effects being visible around moving objects.

As described above, motion vectors within occlusion regions are unreliable because no correspondence exists between the two frames for such areas. Generally, motion estimators that incorporate smoothness constraints (which hold for most known methods of true-motion estimation) tend to produce either a foreground or a background vector when determining a vector to be used for interpolating blocks from occlusion regions, although frequently with some added noise in the vector field.

This problem can be generally simplified from estimating the correct motion vector in the occlusion region to choosing between two candidate vectors, of which either is the foreground, and the other the background. As described above, these candidate vectors can be obtained by various means, for example by choosing the two most frequently used vectors within a spatial neighbourhood, or by means of a so-called vector projection, as explained further below.

A further problem remains, however, in choosing between the candidate vectors, because a match error cannot be used due to lack of correspondence in such areas. This may be addressed through prior knowledge of the motion vector field, but this is not available in all cases. Methods that assume the vector to be used as the background vector will be the one most similar to a global motion vector will fail in cases where the global motion vector can not be correctly determined.

The above problem may be addressed by exploiting the fact that occlusion regions tend to move with the speed of the foreground. Given the choice between two (or more) candidate vectors, the one that resembles the foreground vector most is likely to be the one to use for the speed of the occlusion regions.

Given the knowledge of which vector is the foreground vector, the task of identifying the background vector, i.e. the correct vector in the occlusion region, is then greatly simplified. For example, the vector with the largest difference with the foreground vector can be chosen, or a method based on vector projection can be used, as explained below. In the case that previous steps have identified only two vectors already, the background vector can be selected simple selection of the remaining vector.

An exemplary vector projection method for determining the foreground and background motion vectors will now be described. This' method involves generating two candidate vectors, of which one is the foreground and the other the background vector. From these, it can be determined which one is to be used for each occlusion region by projecting the vectors from the occlusion regions towards an previous occlusion region determined for a previous frame or between a previous pair of frames.

The vector projection concept assumes that objects in video sequences tend to move with inertia, and hence that little or no acceleration takes place over the short time period covering the interval between three successive frames. In the event of accelerating objects, the current motion of the foreground may be different from the motion of the occlusion area, as the latter is determined over a larger temporal distance (i.e. a second previous frame is included in determining the occlusion area). In practice, however, this does not result in significant problems, because any change in speed is typically sufficiently low.

As described above, with reference to figure 2, the occlusion areas can be identified by projecting vectors towards an opposite vector field, in this case from the current frame 100 towards the previous frame 101. In the case where a vector being projected and the vector at the projected location are identical (or sufficiently close to be within a small margin of tolerance), there is determined to be no occlusion at the origin of the projection. If, however, the vectors differ by a significant amount, i.e. above a margin of tolerance, the origin of the projection is located in an occlusion area. Depending upon the location of the origin, the occlusion type will be either covering (with the origin located in the forward motion vector field from the current frame 100) or uncovering (with the origin located in the backward motion vector field from the previous frame 101).

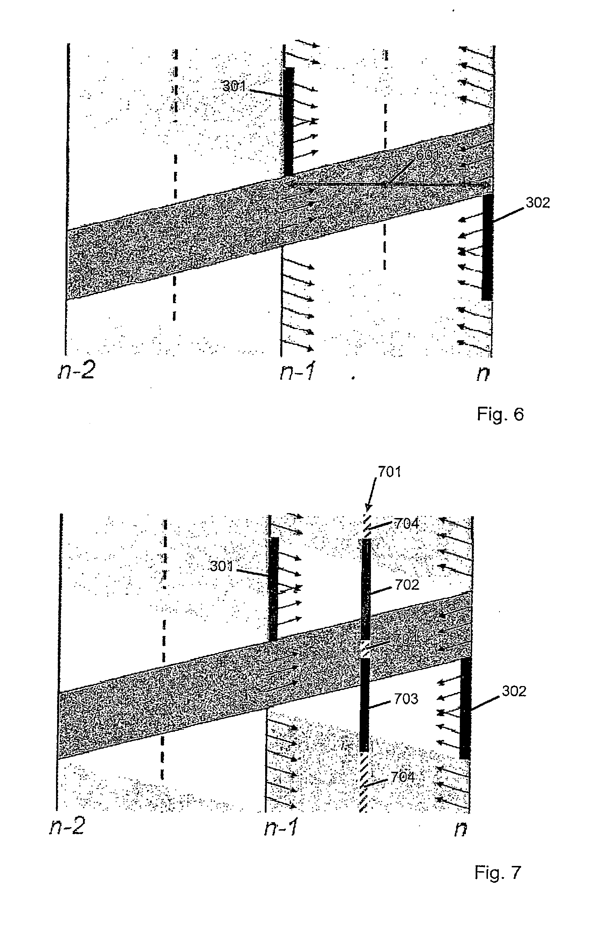

Figure 6 illustrates the previously detected occlusion regions now being re-used as an initialisation point for subsequent processing. The detected occlusion regions 301, 302 are retimed by zero-order interpolation, i.e. along a zero-vector 601 towards the interpolated position. Higher-order interpolations may alternatively be used, for example as disclosed in reference [5].

The result of the zero-order interpolation is a retimed initial occlusion mask 701, as shown in figure 7. The retimed initial occlusion mask 701 comprised occlusion regions 702, 703 and non-occlusion regions 704 that clearly do not correspond to those of a correctly adjusted interpolated occlusion mask. These regions 702, 703, 704 are therefore adjusted, using the appropriate motion vectors derived for the current and previous frames 100, 101.

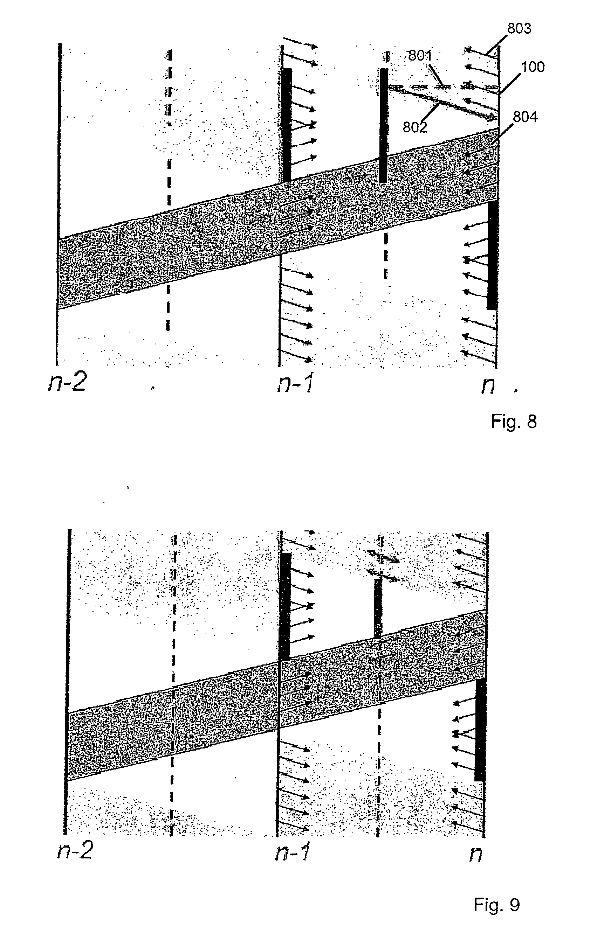

As the size of the occlusion area changes according to its temporal position, occlusion areas are typically over-classified, i.e. an occlusion area is of maximum size on either of the two original frames (the current frame 100 and previous frame 101), and by definition must be smaller in size at any position in-between these frames. Hence, this over-classification can be reduced by performing a similar check as used in the above-described method of determining occlusion areas in the current and previous frames, i.e. projecting vectors towards the vector field at the original position, and comparing both vectors. As shown in figure 8, one of these vectors 801 may be a zero vector. When projected from the occlusion-free vector field in the retimed occlusion mask 701, both vectors 801, 802 will not match the backward motion vectors 803, 804 from the current frame 100 only when the origin is in an occlusion area.

In non-occlusion areas, including the areas that are de-classified when the initial re-timed occlusion areas are reduced, the motion vectors can be obtained as normal, for example by use of a non-motion compensated average of motion vectors from the current and previous frames, as shown schematically in figure 9.

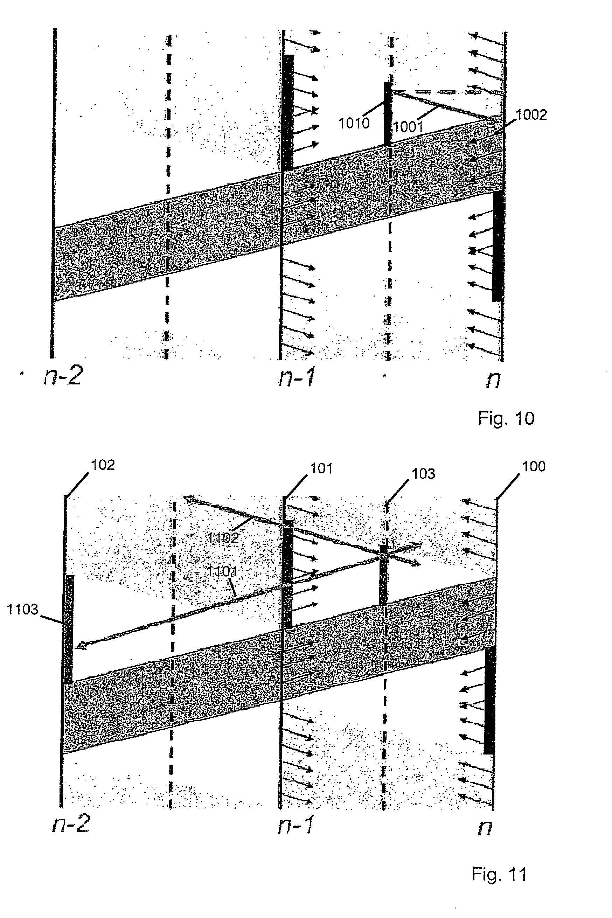

The result of the above steps is a classification of occlusion areas, where projection from any point of the occlusion regions in the interpolated frame results in a substantial difference of both motion vectors (for example, as shown in figure 10, a background vector 1001 pointing towards a foreground vector 1002). This confirms occlusion in this region 1010, as the initial vector projects towards a substantially different vector. According to the above method, either of the two vectors may be the foreground vector, and the other will be the background vector. The actual assignment is, however, not known.

As illustrated in figure 11, the decision as to which candidate vector is to be chosen as the foreground vector and which is the background vector can be made by projecting the two candidate vectors 1101, 1102 backwards towards a second previous frame 102. The vector 1101 corresponding to the foreground will point towards a previously determined occlusion area 1103 detected for the second previous frame 102, or for an interpolated occlusion region between the previous pair of input frames. This vector 1101 is, of high likelihood, the foreground vector, whereas the other is, of high likelihood, the background vector.

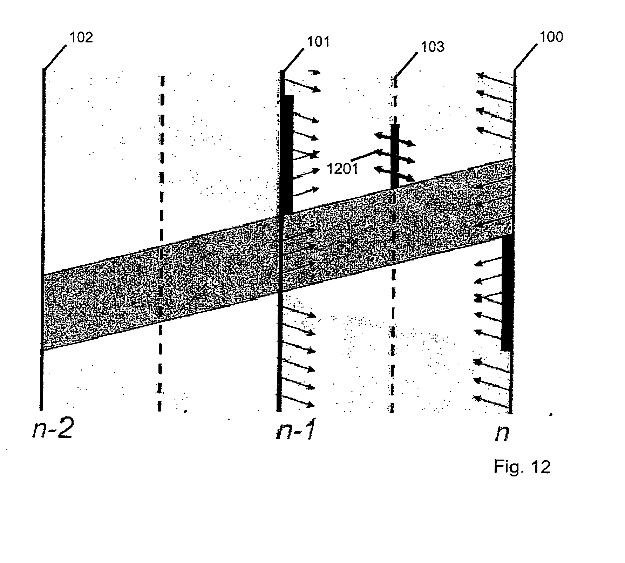

Using the result of the vector projection method above, the retimed and readjusted occlusion mask can be filled with blocks from the previous and current frames 101, 100 according to the appropriate estimated motion vectors. As shown in figure 12, this results in the correct background motion vector field 1201 being applied in the covering occlusion region of the interpolated frame 103.

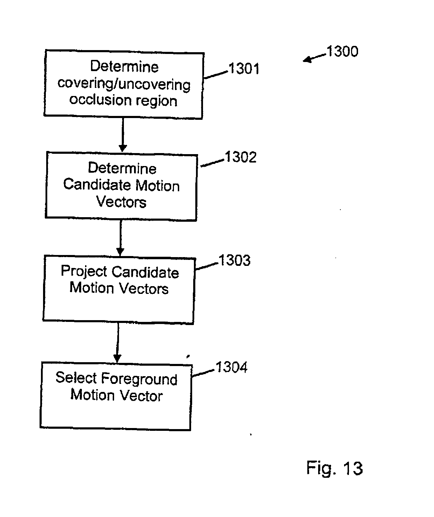

Figure 13 is a schematic flow diagram of a method 1300 according to the first aspect of the invention. In a first step 1301, the occlusion regions are determined, through determining which blocks in the previous (or current) frame have no corresponding blocks in the current (or previous) frame. In a second step 1302, at least two candidate motion vectors are determined for each block in the occlusion region. In a third step 1303, the candidate motion vectors are projected on to a second previous frame, that is to say a frame that is in a temporal position before the previous frame. This second previous frame is preferably the frame immediately preceding the previous frame, but other frames may be used instead in some cases. In a fourth step 1304, the foreground motion vector is selected from the candidate vector that projects on to an occlusion region in the second previous frame. The result of the method 1300 is that the correct motion vector, identified by elimination as the background vector, can then be used in projecting blocks from occlusion regions in the previous and current frames on to an interpolated frame.

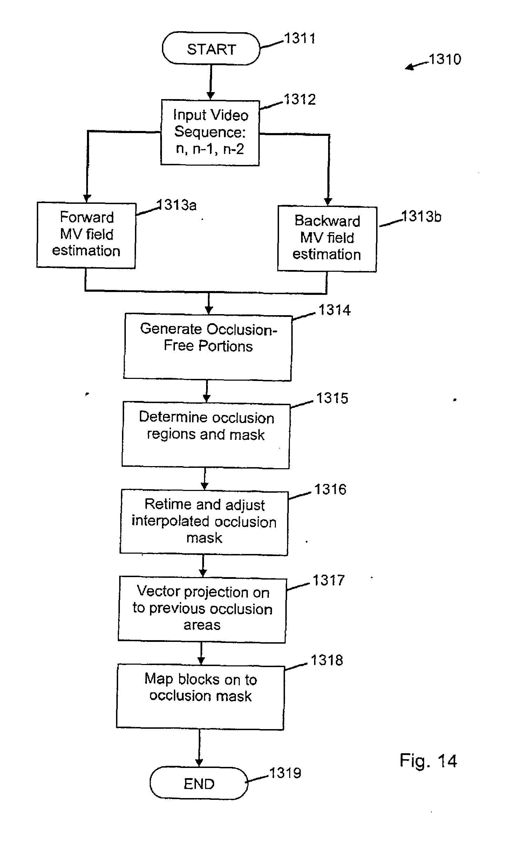

Figure 14 is a schematic flow diagram of an embodiment of the method 1310 according to the invention. The method starts (step 1311) with an input video sequence (frames 100, 101, 102) being provided (step 1312). The second previous frame 102, or a previously determined interpolated frame, is provided with indicated occlusion regions to enable the method to determine the foreground and background motion vectors for subsequent interpolated occlusion areas.

At steps 1313a, 1313b, which may be carried out in parallel, the forward and backward motion vector fields for the current and previous frames are estimated. These fields are used in step 1314 to generate occlusion-free portions of the current and previous frames, from which occlusion-free portions of the interpolated frame can be determined. The occlusion regions, being those regions for which no corresponding blocks in the current and previous frames exist, are determined (step 1315), to provide an occlusion mask for the previous and current frames. The occlusion masks are re-timed to the interpolated frame, and adjusted according to the motion vectors already estimated (step 1316).

At step 1317, the motion vectors for the retimed and adjusted occlusion areas in the interpolated frame are projected towards previous occlusion areas, e.g. towards a second previous frame or to a previous interpolated frame. The remaining portions of the interpolated frame are filled with blocks from the current or previous frames, according to the appropriate estimated motion vector (step 1318), and the method ends (step 1319). The overall method can be repeated for each new frame, i.e. where n is incremented by 1, and the results already obtained, e.g. the occlusion areas in the previous frame, can be stored for the next iteration of the method.

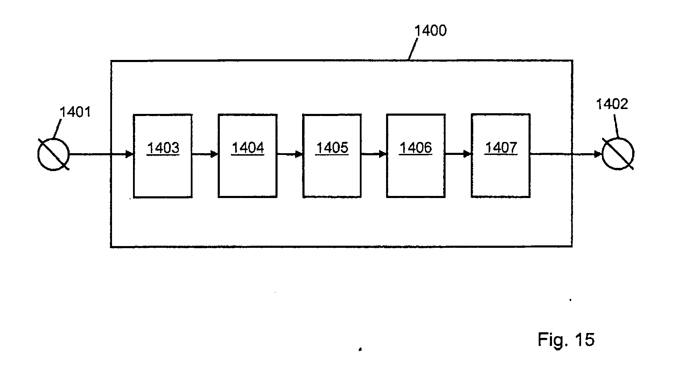

Figure 15 is a schematic block diagram of a video frame rate up-scaler module 1400, configured to take an input video sequence at a video input 1401 and provide an up-scaled video sequence at a video output 1402. The video up-scaler module 1400 comprises a motion vector estimator 1403, a vector projection module 1404, an occlusion area retimer and adjuster 1405, a vector projection module 1406 and a video frame interpolator 1407. The motion vector estimator 1403 comprises a forward and a backward estimator for estimating the required forward and backward estimated motion vector fields for the first previous frame. The vector projection module 1404 projects forward and backward estimated motion vectors output from the motion vector estimator 1403 in order to determine occlusion masks for the current and previous frames. The occlusion mask retimer and adjuster 1405 takes the occlusion masks determined by the vector projection module 1404 and generates an occlusion area mask for an interpolated frame. The correct motion vector to be used for each of the occlusion areas in the occlusion area mask is then determined by the second vector projection module 1406. The output from the second vector projection module 1406 and occlusion mask retimer and adjuster 1405 is then used by the video frame interpolator 1407 in generating an intermediate video frame 103 (figures 1-3), which is then output together with the input video frames as an up-scaled video sequence at the output 502.

The video frame-rate up-scaler module 1400 may be embodied as a custom module in the form of an application specific integrated circuit (ASIC). The module may alternatively be embodied as software implemented by being executed on a central processing unit or graphical processing unit of a computer. Different parts of the up-scaler module 1400 may be implemented on different modules or different physical components of a physical embodiment. Certain modules, for example the motion vector estimator 1403 and the vector projection modules 1404, 1406, may comprise modules operating in parallel to increase the overall operational speed.

Other embodiments are intentionally within the scope of the invention as defined by the appended claims.

### References

[1] M. Mertens and G. de Haan, 'Motion Vector field improvement for picture rate conversion with reduced Halo', Proc. of the SPIE/IST VCIP, San Jose, 21-26 Jan. 2001, pp. 352-362.
[2] R.B. Wittebrood, G. de Haan and R. Lodder, 'Tackling occlusion in scan rate conversion systems', Digest of the ICCE'03, Jun. 2003, pp. 344-45.
[3] WO 96/28931: Motion-compensated interpolation
[4] E.B. Bellers, J.W. van Gurp, J.G.W.M. Janssen, R. Braspenning, R. Witterbrood, 'Solving Occlusion in Frame Rate Up Conversion', Digest of International Conference on Consumer Electronics, January 2007, pp. 1-2.
[5] WO 2005/027525: Motion vector field re-timing
[6] WO 2005/022922: Temporal interpolation of a pixel on basis of occlusion detection
[7] WO 2007/063465: Motion vector field correction

## Claims

1. A method of generating an interpolated frame in a temporal sequence of video frames comprising a current frame and a previous frame, the method comprising:
determining an occlusion region comprising blocks in the previous frame identified as having no corresponding block in the current frame;
for each block in the occlusion region, determining two candidate motion vectors corresponding to a background motion vector and a foreground motion vector; and
selecting as the foreground motion vector the candidate motion vector that projects on to a previously determined occlusion area in a second previous frame.

2. The method of claim 1 wherein the candidate motion vectors are determined by selecting the two most common motion vectors estimated for a spatial neighbourhood surrounding each block.

3. The method of claim 1 wherein corresponding blocks in the current frame are determined according to a minimum sum of absolute differences between each block in the previous frame and a selection of candidate blocks in the current frame.

4. The method of claim 1 wherein the candidate motion vectors are forward motion vectors.

5. The method of claim 1 comprising generating the interpolated frame in temporal sequence between the current and previous frames by generating blocks in an occlusion region of the interpolated frame according to a projection of the background motion vector on to the previous frame.

6. The method of claim 5 wherein generating the interpolated frame comprises:
retiming a covering occlusion mask from the covering occlusion region of the previous frame; and
adjusting the boundaries of the retimed occlusion mask according to the two candidate motion vectors.

7. The method of claim 1 comprising:
calculating a motion vector field for blocks in the previous frame having corresponding blocks in the current frame; and
generating an occlusion-free portion of the interpolated frame at a temporal position between the current and previous frames using the calculated motion vector field.

8. An apparatus for generating an interpolated frame in a temporal sequence of video frames comprising a current frame and a previous frame, the apparatus comprising:
an occlusion region generator for determining an occlusion region in the previous frame comprising blocks having no corresponding block in the current frame;
a motion vector module for determining two candidate motion vectors corresponding to a background motion vector and a foreground motion vector for each block in the occlusion region; and
a vector projection module for selecting as the foreground motion vector the candidate motion vector that projects on to a previously determined occlusion area in a second previous frame.

9. A video processing apparatus comprising the apparatus of claim 8 and configured to receive an input video input signal at a first frame rate and display an output video signal at a second higher frame rate.

10. A computer program for instructing a computer to execute the method of any one of claims 1 to 7.
